# FASCICULE DE BREVET EUROPEEN

(11) **EP 3 755 756 B1**
(45) Date de publication et mention de la délivrance du brevet: **22.05.2024**
(21) Numéro de dépôt: 19711156.0
(22) Date de dépôt: 15.02.2019
(51) Int. Cl.: C09K 5/04, H01M 10/625, H01M 10/663

(54) **UTILISATION DU 2,3,3,3-TETRAFLUOROPROPENE POUR LE PRECHAUFFAGE D'UNE BATTERIE D'UN VEHICULE ELECTRIQUE OU HYBRIDE**
VERWENDUNG VON 2,3,3,3-TETRAFLUORPROPEN ZUM VORHEIZEN EINER BATTERIE EINES ELEKTRO- ODER HYBRIDFAHRZEUGS
USE OF 2,3,3,3-TETRAFLUOROPROPENE FOR PREHEATING A BATTERY OF AN ELECTRIC OR HYBRID VEHICLE

(30) Priorité: 21.02.2018 FR 1851476
(43) Date de publication de la demande: 30.12.2020
(73) Titulaire: ARKEMA FRANCE, 92700 Colombes (FR)
(72) Inventeur: RACHED, Wissam, 92705 COLOMBES CEDEX (FR); SCHMIDT, Gregory, 69493 PIERRE-BENITE Cedex (FR); TEISSIER, Rémy, 69493 PIERRE-BENITE Cedex (FR)
(74) Mandataire: Arkema Patent
(86) Numéro de dépôt international: PCT/FR2019/050348
(87) Numéro de publication internationale: WO 2019/162599

(56) Documents cités:
- WO-A1-2018/142090
- FR-A1- 2 937 906
- US-A1- 2010 307 723
- US-A1- 2011 139 397
- US-A1- 2015 191 072

## Description

### DOMAINE DE L'INVENTION

La présente invention concerne l'utilisation d'un fluide frigorigène comprenant du 2,3,3,3-tétrafluoropropène pour le préchauffage d'une batterie d'un véhicule électrique ou hybride à partir du démarrage du véhicule.

### ARRIERE-PLAN TECHNIQUE

Les batteries des véhicules électriques ou hybrides donnent un rendement maximal dans des conditions d'utilisation spécifiques et surtout dans une plage de température bien spécifique. Ainsi, dans les climats froids, l'autonomie des véhicules électriques ou hybrides pose problème, d'autant plus que les besoins importants de chauffage consomment une grande partie de l'énergie électrique stockée. En outre, à basse température, la puissance disponible de la batterie est faible, ce qui pose un problème de conduite.

Le chauffage des véhicules électriques ou hybrides est basé sur l'utilisation de pompes à chaleur et/ou de résistances électriques. Une pompe à chaleur comprend un circuit de compression de vapeur capable de chauffer le véhicule, et éventuellement de le refroidir en fonction des besoins. Un fluide frigorigène circule dans ce circuit et subit ainsi une évaporation, suivie d'une compression, d'une condensation et d'une détente pour compléter le cycle.

Le 2,3,3,3-tétrafluoropropène (HFO-1234yf) est une hydrofluorooléfine présentant des propriétés thermodynamiques et thermophysiques très favorables pour une utilisation comme fluide frigorigène, en particulier dans les applications de refroidissement, de climatisation, de production d'électricité (notamment au moyen des cycles de Rankine) et de pompes à chaleur. De plus, ce produit est particulièrement avantageux puisqu'il présente également un faible potentiel de réchauffement climatique (GWP).

Le document FR 2 937 906 décrit par exemple un procédé de chauffage et/ou de climatisation d'un habitacle de véhicule automobile à l'aide d'une boucle frigorigène réversible dans laquelle circule un fluide frigorigène comprenant du 2,3,3,3-tétrafluoropropène. Ce procédé convient également aux véhicules hybrides conçus pour fonctionner en alternance sur moteur thermique et moteur électrique.

Par ailleurs, le document EP 2 880 739 divulgue un système de charge d'une batterie de véhicule électrique qui permet en même temps de contrôler la température de la batterie du véhicule ainsi que la température de l'habitacle.

Le document US 5,305,613 décrit un système de chauffage et de climatisation d'habitacle d'un véhicule électrique que l'on fait fonctionner avant le démarrage du véhicule pour augmenter le confort du conducteur.

Le document US 2015/191072 décrit l'utilisation de HFO-1234yf comme fluide frigorigène dans un circuit de réfrigération à compression pour le chauffage d'une batterie d'un véhicule électrique entre 10-40°C .

Cependant, aucun de ces documents ne décrit de moyens permettant de préchauffer la batterie d'un véhicule électrique à partir du démarrage du véhicule.

Il existe donc un réel besoin de fournir une méthode de préchauffage rapide et efficace de la batterie d'un véhicule électrique ou hybride à partir du démarrage du véhicule, pour augmenter les performances et la durée de vie de la batterie.

### RESUME DE L'INVENTION

L'invention concerne en premier lieu l'utilisation d'un fluide frigorigène comprenant du 2,3,3,3-tétrafluoropropène dans un circuit de compression de vapeur comprenant un compresseur fonctionnant initialement à une vitesse de rotation de 300 à 1000 t/min, pour le préchauffage d'une batterie d'un véhicule électrique ou hybride à partir du démarrage du véhicule.

Dans certains modes de réalisation, la batterie est à une température initiale avant le démarrage qui est inférieure ou égale à 5°C, de préférence inférieure ou égale à 0°C, de préférence encore inférieure ou égale à -10°C, de préférence encore inférieure ou égale à -20°C.

Dans certains modes de réalisation, la batterie est à une température finale à l'issue du préchauffage qui est supérieure ou égale à 10°C, de préférence supérieure ou égale à 15°C, et de préférence encore de 15 à 30°C.

Dans certains modes de réalisation, la batterie comprend une résistance interne, qui contribue au préchauffage de la batterie.

Dans certains modes de réalisation, la température extérieure, pendant la durée du préchauffage, est inférieure ou égale à 5°C, de préférence inférieure ou égale à 0°C, de préférence encore inférieure ou égale à -10°C, de préférence encore inférieure ou égale à -20°C.

Dans certains modes de réalisation, le circuit de compression de vapeur comprend un compresseur qui fonctionne initialement à une vitesse de rotation de 350 à 850 t/min et de préférence de 500 à 800 t/min.

Dans certains modes de réalisation, le circuit de compression de vapeur est également adapté à chauffer l'habitacle du véhicule et/ou à climatiser l'habitacle du véhicule et/ou à refroidir la batterie du véhicule.

L'invention concerne également un procédé de pré-conditionnement de la batterie d'un véhicule électrique ou hybride comprenant :
- le démarrage du véhicule, la batterie du véhicule étant à une température initiale avant ce démarrage ; puis
- le préchauffage de la batterie du véhicule de la température initiale à une température finale supérieure à la température initiale, au moins en partie au moyen d'un fluide frigorigène comprenant du 2,3,3,3-tétrafluoropropène.

Dans certains modes de réalisation, la batterie est à une température initiale qui est inférieure ou égale à 5°C, de préférence inférieure ou égale à 0°C, de préférence encore inférieure ou égale à -10°C, de préférence encore inférieure ou égale à -20°C.

Dans certains modes de réalisation, la batterie est à une température finale qui est supérieure ou égale à 10°C, de préférence supérieure ou égale à 15°C, et de préférence encore de 15 à 30°C.

Dans certains modes de réalisation, le fluide frigorigène circule dans un circuit de compression de vapeur.

La présente invention permet de répondre au besoin exprimé ci-dessus. Elle fournit plus particulièrement une méthode de préchauffage rapide et efficace de la batterie d'un véhicule électrique ou hybride à partir du démarrage du véhicule, qui permet d'augmenter les performances et la durée de vie de la batterie.

Cela est accompli grâce à l'utilisation d'un fluide frigorigène comprenant du 2,3,3,3-tétrafluoropropène, qui est avantageuse par rapport à celle du composé frigorigène classique 1,1,1,2-tétrafluoroéthane. Plus précisément, comme montré dans les exemples 2 et 3, l'utilisation du 2,3,3,3-tétrafluoropropène en tant que fluide frigorigène pour le préchauffage de la batterie d'un véhicule électrique permet un temps de préchauffage diminué et donc un démarrage plus rapide, par rapport à celle du 1,1,1,2-tétrafluoroéthane.

### BREVE DESCRIPTION DES FIGURES

La **figure 1** représente un profil de température en fonction du temps au cours du préchauffage de la batterie d'un véhicule électrique.

En abscisse figure le temps (en min) et en ordonnée figure la température (en °C).

La **figure 2** représente les résultats d'un test de préchauffage d'une batterie de véhicule électrique de -15°C à 15°C.

En abscisse figure l'énergie (en kJ) et en ordonnée figure le temps (en min). La courbe noire (A) représente les résultats obtenus avec une pompe à chaleur fonctionnant avec du HFC-134a, tandis que la courbe grise (B) représente les résultats obtenus avec une pompe à chaleur fonctionnant avec du HFO-1234yf.

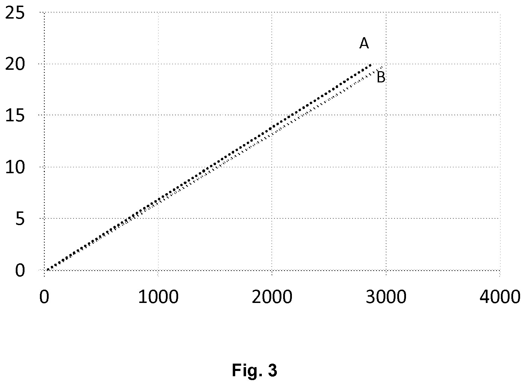

La **figure 3** représente les résultats d'un test de préchauffage d'une batterie de véhicule électrique de -4°C à 15°C.

En abscisse figure l'énergie (en kJ) et en ordonnée figure le temps (en min). La courbe noire (A) représente les résultats obtenus avec une pompe à chaleur fonctionnant avec du HFC-134a, tandis que la courbe grise (B) représente les résultats obtenus avec une pompe à chaleur fonctionnant avec du HFO-1234yf.

### DESCRIPTION DE MODES DE REALISATION DE L'INVENTION

L'invention est maintenant décrite plus en détail et de façon non limitative dans la description qui suit.

Dans le cadre de l'invention, le « *HFO-1234yf* » se réfère au 2,3,3,3-tétrafluoropropène et le « *HFC-134a* » se réfère au 1,1,1,2-tétrafluoroéthane.

Par « *fluide frigorigène* »*,* on entend un fluide susceptible d'absorber de la chaleur en s'évaporant à basse température et basse pression et de rejeter de la chaleur en se condensant à haute température et haute pression, dans un circuit de compression de vapeur, selon l'application considérée. De manière générale, un fluide frigorigène peut consister essentiellement en un seul composé de transfert de chaleur ou être un mélange de plusieurs composés de transfert de chaleur.

### Installation pour le préchauffage de la batterie

Par « *véhicule électrique* » on entend un appareil motorisé susceptible de déplacer ou transporter des personnes ou du matériel, dont le moteur est alimenté en énergie électrique par une batterie motrice (de préférence en tout, mais éventuellement en partie seulement dans le cas d'un véhicule électrique hybride). La batterie motrice est appelée plus simplement « *batterie* » dans le cadre de la présente demande. La batterie peut notamment être une batterie lithium-ion.

Le véhicule électrique est de préférence une automobile électrique. Alternativement, il peut s'agir d'un camion électrique ou d'un bus électrique.

L'invention repose sur un procédé de transfert de chaleur, consistant en le préchauffage de la batterie du véhicule, dans une installation de transfert de chaleur. L'installation de transfert de chaleur comporte un circuit de compression de vapeur. Le circuit de compression de vapeur contient un fluide frigorigène, qui assure le transfert de chaleur.

Généralement, le circuit de compression de vapeur est une pompe à chaleur. Le circuit de compression de vapeur est adapté à chauffer la batterie du véhicule électrique ou hybride.

Dans certains modes de réalisation, le circuit de compression de vapeur est également adapté à chauffer l'habitacle du véhicule.

Dans certains modes de réalisation, le circuit de compression de vapeur est également adapté à climatiser l'habitacle du véhicule.

Dans certains modes de réalisation, le circuit de compression de vapeur est également adapté à refroidir la batterie du véhicule.

A cet effet le circuit de compression de vapeur peut comporter différentes branches dotées d'échangeurs de chaleur distincts, le fluide frigorigène circulant ou non dans ces branches, selon le mode de fonctionnement. Optionnellement, alternativement ou en complément, le circuit de compression de vapeur peut comporter des moyens de changement du sens de circulation du fluide frigorigène, comprenant par exemple une ou plusieurs vannes à trois voies ou à quatre voies.

Les étapes principales du procédé de transfert de chaleur sont mises en oeuvre de manière cyclique et comprennent :
- l'évaporation du fluide frigorigène dans un évaporateur ;
- la compression du fluide frigorigène dans un compresseur ;
- la condensation du fluide frigorigène dans un condenseur ;
- la détente du fluide frigorigène dans un module d'expansion.

L'évaporation du fluide frigorigène peut être effectuée à partir d'une phase liquide ou d'un mélange diphasique liquide / vapeur.

Dans certains modes de réalisation, le compresseur a initialement une vitesse de rotation de 350 à 850 t/min et de préférence de 500 à 800 t/min. Ultérieurement, la vitesse de rotation du compresseur peut rester dans les gammes ci-dessus pendant la durée du préchauffage ; ou bien augmenter et dépasser les gammes ci-dessus au cours du préchauffage.

Le compresseur peut être hermétique, semi-hermétique ou ouvert. Les compresseurs hermétiques comprennent une partie moteur et une partie compression qui sont confinées dans une enceinte hermétique non démontable. Les compresseurs semi-hermétiques comprennent une partie moteur et une partie compression qui sont directement assemblées l'une contre l'autre. L'accouplement entre la partie moteur et la partie compression est accessible en dissociant les deux parties par démontage. Les compresseurs ouverts comprennent une partie moteur et une partie compression qui sont séparées. Ils peuvent fonctionner par entraînement par courroie ou par accouplement direct.

A titre de compresseur, on peut utiliser notamment un compresseur dynamique, ou un compresseur à déplacement positif.

Les compresseurs dynamiques comprennent les compresseurs axiaux et les compresseurs centrifuges, qui peuvent être à un ou plusieurs étages. Les mini-compresseurs centrifuges peuvent également être employés.

Les compresseurs à déplacement positif comprennent les compresseurs rotatifs et les compresseurs alternatifs.

Les compresseurs alternatifs comprennent les compresseurs à diaphragme et les compresseurs à piston.

Les compresseurs rotatifs comprennent les compresseurs à vis, les compresseurs à lobes, les compresseurs scroll (ou à spirale), les compresseurs à anneau liquide, et les compresseurs à palette. Les compresseurs à vis peuvent être de préférence bi-vis ou mono-vis.

La mise en oeuvre de l'invention est particulièrement avantageuse lorsqu'un compresseur scroll est utilisé en raison de son bon rendement dans les conditions typiques d'un véhicule automobile.

Dans l'installation qui est utilisée, le compresseur peut être entraîné par un moteur électrique ou par une turbine à gaz (par exemple alimentée par les gaz d'échappement du véhicule) ou par engrenage.

Dans l'installation qui est utilisée, le compresseur peut comprendre un dispositif d'injection de vapeur ou de liquide. L'injection consiste à faire introduire dans le compresseur du réfrigérant à l'état liquide ou vapeur à un niveau intermédiaire entre le début et la fin de compression.

L'évaporateur et le condenseur sont des échangeurs de chaleur. Il est possible d'utiliser tout type d'échangeur de chaleur dans l'invention, et notamment des échangeurs de chaleur à co-courant ou, de préférence, des échangeurs de chaleur à contre-courant.

Par « *échangeur de chaleur à contre-courant* »*,* on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant.

L'installation peut également éventuellement comprendre au moins un circuit de fluide caloporteur utilisé pour transporter la chaleur (avec ou sans changement d'état) entre le circuit contenant la composition de transfert de chaleur et la batterie. De préférence, l'installation ne comprend pas de circuit de fluide caloporteur utilisé pour transporter la chaleur entre le circuit contenant la composition de transfert de chaleur et la batterie. De préférence, un échangeur de chaleur du circuit contenant la composition de transfert de chaleur est en contact avec la batterie ou intégré à la batterie.

L'installation peut également éventuellement comprendre deux circuits de compression de vapeur (ou plus), contenant des compositions de transfert de chaleur identiques ou distinctes. Par exemple, les circuits de compression de vapeur peuvent être couplés entre eux. De préférence toutefois, l'installation comprend un unique circuit de compression de vapeur.

Selon l'invention, le fluide frigorigène peut être surchauffé entre l'évaporation et la compression, c'est-à-dire qu'il peut être porté à une température supérieure à la température de fin d'évaporation, entre l'évaporation et la compression.

Par « *température de début d'évaporation* »*,* on entend la température du fluide frigorigène à l'entrée de l'évaporateur.

Par « *température de fin d'évaporation* »*,* on entend la température du fluide frigorigène lors de l'évaporation de la dernière goutte de fluide frigorigène sous forme liquide (température de vapeur saturante ou température de rosée).

Lorsque le fluide frigorigène est du HFO-1234yf seul ou un mélange azéotropique contenant du HFO-1234yf, la température de début d'évaporation est égale à la température de fin d'évaporation à pression constante.

On désigne par « *surchauffe »* (équivalent ici à « *surchauffe à l'évaporateur* ») le différentiel de température entre la température maximale atteinte par le fluide frigorigène avant la compression (c'est-à-dire la température maximale atteinte par le fluide frigorigène à l'issue de l'étape de surchauffe) et la température de fin d'évaporation. Cette température maximale est en général la température du fluide frigorigène à l'entrée du compresseur. Elle peut correspondre à la température du fluide frigorigène à la sortie de l'évaporateur. Alternativement, le fluide frigorigène peut être au moins en partie surchauffé entre l'évaporateur et le compresseur (par exemple au moyen d'un échangeur interne). La surchauffe peut être ajustée par un réglage adéquat des paramètres de l'installation, et notamment par un réglage du module d'expansion.

Dans le procédé de l'invention, la surchauffe peut être de 1 à 25°C, de préférence de 2 à 10°C, de préférence de 3 à 7°C et de préférence encore de 4 à 6°C.

Selon l'invention, le fluide frigorigène peut être sous-refroidi entre la condensation et la détente, c'est-à-dire porté à une température inférieure à la température de fin de condensation, entre la condensation et la détente.

Par « *température de début de condensation* » on entend la température du fluide frigorigène dans le condenseur lors de l'apparition de la première goutte liquide de fluide frigorigène, appelée température de saturation vapeur ou température de rosée.

Par « *température de fin de condensation* »*,* on entend la température du fluide frigorigène lors de la condensation de la dernière bulle de fluide frigorigène sous forme gazeuse, appelée température de saturation liquide ou température de bulle.

On désigne par « *sous-refroidissement* » (équivalent ici à *« sous-refroidissement au condenseur* ») l'éventuel différentiel de température (en valeur absolue) entre la température minimale atteinte par le fluide frigorigène avant la détente (c'est-à-dire la température minimale atteinte par le fluide frigorigène à l'issue de l'étape de sous-refroidissement) et la température de fin de condensation. Cette température minimale est en général la température du fluide frigorigène à l'entrée du module d'expansion. Elle peut correspondre à la température du fluide frigorigène à la sortie du condenseur. Alternativement, le fluide frigorigène peut être au moins en partie sous-refroidi entre le condenseur et le module d'expansion (par exemple au moyen d'un échangeur interne).

Dans le procédé de l'invention, le sous-refroidissement, lorsqu'il est présent, peut être de 1 à 50°C, de préférence de 1 à 40°C, de préférence de 1 à 30°C, de préférence de 1 à 20°C, de 1 à 15°C, de préférence de 1 à 10°C et de préférence encore de 1 à 5°C.

Le module d'expansion peut être une vanne thermostatique appelée détendeur thermostatique ou électronique à un ou plusieurs orifices, ou un détendeur pressostatique qui règle la pression. Il peut également s'agir d'un tube capillaire dans lequel la détente du fluide est obtenue par la perte de charge dans le tube.

### Fluide frigorigène

L'invention utilise un fluide frigorigène comprenant du HFO-1234yf. D'autres composés de transfert de chaleur peuvent être présents ou non dans le fluide frigorigène en association avec le HFO-1234yf.

Le fluide frigorigène peut être associé à des lubrifiants et/ou des additifs, pour former une composition de transfert de chaleur.

La composition de transfert de chaleur est présente et circule dans le circuit de compression de vapeur.

Dans certains modes de réalisation, le fluide frigorigène de l'invention consiste essentiellement, voire consiste, en du HFO-1234yf.

Dans d'autres modes de réalisation, ce fluide frigorigène comprend du HFO-1234yf en mélange avec un ou plusieurs autres composés de transfert de chaleur, tels que des hydrofluorocarbures et/ou hydrofluorooléfines et/ou hydrocarbures et/ou hydrochlorofluorooléfines et/ou du CO₂.

Parmi les hydrofluorocarbures, on peut citer notamment le difluorométhane (HFC-32), le pentafluoroéthane (HFC-125), le 1,1,2,2-tétrafluoroéthane (HFC-134), le 1,1,1,2-tétrafluoroéthane (HFC-134a), le 1,1-difluoroéthane (HFC-152a), le fluoroéthane (HFC-161), le 1,1,1,2,3,3,3-heptafluoropropane (HFC-227ea), le 1,1,1-trifluoropropane (HFC-263fb) et leurs mélanges.

Parmi les hydrofluorooléfines on peut citer notamment le 1,3,3,3-tétrafluoropropène (HFO-1234ze), sous forme cis et/ou trans, et de préférence sous forme trans ; et le trifluoroéthylène (HFO-1123).

Parmi les hydrochlorofluorooléfines, on peut citer notamment le 1-chloro-3,3,3-trifluoropropène (HCFO-1233zd), sous forme cis et/ou trans, et de préférence sous forme trans.

Dans certains modes de réalisation, ce fluide frigorigène comprend au moins 50 % de HFO-1234yf, ou au moins 60 % de HFO-1234yf, ou au moins 70 % de HFO-1234yf, ou au moins 80 % de HFO-1234yf, ou au moins 90 % de HFO-1234yf, ou au moins 95 % de HFO-1234yf, en poids.

Les additifs qui peuvent être présents dans la composition de transfert de chaleur de l'invention peuvent notamment être choisis parmi les nanoparticules, les stabilisants, les tensioactifs, les agents traceurs, les agents fluorescents, les agents odorants et les agents de solubilisation.

La quantité totale en additifs, n'excède pas 5 % en poids, en particulier 4 %, en plus particulier 3 % et tout particulièrement 2 % en poids voire 1 % en poids de la composition de transfert de chaleur.

Dans certains modes de réalisation, le HFO-1234yf contient des impuretés. Lorsqu'elles sont présentes, elles peuvent représenter moins de 1 %, de préférence moins de 0,5 %, de préférence moins de 0,1 %, de préférence moins de 0,05 % et de préférence moins de 0,01 % (en poids) par rapport au HFO-1234yf.

Un ou plusieurs lubrifiants peuvent être présents dans la composition de transfert de chaleur. Ces lubrifiants peuvent être choisis parmi des esters de polyols (POE), des polyalkylène glycols (PAG), ou des polyvinyle éthers (PVE).

Les lubrifiants peuvent représenter de 1 à 50%, de préférence de 2 à 40 % et de préférence encore de 5 à 30 % (en poids) de la composition de transfert de chaleur.

### Utilisation du fluide frigorigène

L'invention concerne l'utilisation d'un fluide frigorigène comprenant du HFO-1234yf pour le préchauffage d'une batterie d'un véhicule électrique ou hybride à partir du démarrage du véhicule, et pendant une période qui suit ce démarrage (et ce, que le véhicule soit en circulation ou immobile pendant cette période).

Par « *démarrage du véhicule »* on entend le moment ou le véhicule est mis en marche ou allumé.

La batterie comprend généralement un ou de préférence plusieurs éléments d'accumulation d'énergie électrique connectés en série et/ou en parallèle.

Par « *température de la batterie* », on entend généralement la température d'une paroi extérieure d'un ou de plusieurs des éléments d'accumulation d'énergie électrique.

La température de la batterie peut être mesurée au moyen d'un capteur de température. Si plusieurs capteurs de température sont présents au niveau de la batterie, la température de la batterie peut être considérée comme étant la moyenne des différentes températures mesurées.

Dans certains modes de réalisation, la batterie est à une température initiale avant le démarrage qui est inférieure ou égale à 5°C, de préférence inférieure ou égale à 0°C, de préférence encore inférieure ou égale à -10°C et de préférence encore inférieure ou égale à -20°C.

La température initiale avant le démarrage peut notamment être de 5 à 0°C ; ou de 0 à -5°C ; ou de -5 à -10°C ; ou de -10 à -15°C ; ou de -15 à -20°C ; ou de -20 à -25°C ; ou de -25 à -30°C.

Par « *température initiale* »*,* on entend la température de la batterie du véhicule électrique ou hybride avant le démarrage du véhicule.

Dans certains modes de réalisation, la batterie est à une température finale à l'issue du préchauffage qui est supérieure ou égale à 10°C, de préférence supérieure ou égale à 15°C, et de préférence encore de 15 à 30°C.

La température finale à l'issue du préchauffage peut notamment être de 10 à 15°C ; ou de 15 à 20°C ; ou de 20 à 25°C ; ou de 25 à 30°C.

Par « *température finale* »*,* on entend la température de la batterie du véhicule électrique ou hybride à l'issue du préchauffage de la batterie du véhicule.

La température finale correspond à une température maximale atteinte par la batterie du véhicule après le démarrage. La température de la batterie peut ensuite rester constante et égale à la température finale, ou elle peut varier en demeurant avantageusement dans une gamme de température donnée. Cette température peut par exemple varier dans une gamme de 10 à 30°C, par exemple de 10 à 15°C et/ou de 15 à 20°C et/ou de 20 à 25°C et/ou de 25 à 30°C.

Le différentiel entre la température finale et la température initiale peut être en particulier : supérieur ou égal à 5°C ; ou supérieur ou égal à 10°C ; supérieur ou égal à 15°C ; ou supérieur ou égal à 20°C ; ou supérieur ou égal à 25°C ; ou supérieur ou égal à 30°C ; ou supérieur ou égal à 35°C ; ou supérieur ou égal à 40°C.

Dans certains modes de réalisation, la batterie comprend une résistance interne. Cette résistance peut contribuer au préchauffage de la batterie, en plus du circuit de compression de vapeur décrit ci-dessus.

Dans certains modes de réalisation, notamment lorsque la batterie comprend une résistance interne, la dérivée de la température de la batterie par rapport au temps augmente au cours du préchauffage.

Dans certains modes de réalisation, le maintien de la température de la batterie après le préchauffage dans une gamme de température donnée est assuré par la résistance interne.

Dans certains modes de réalisation, le maintien de la température de la batterie après le préchauffage dans une gamme de température donnée est obtenu par chauffage et/ou refroidissement au moyen du fluide frigorigène.

Dans certains modes de réalisation, le maintien de la température de la batterie après le préchauffage dans une gamme de température donnée est assuré en partie par la résistance interne et en partie par chauffage et/ou refroidissement au moyen du fluide frigorigène.

Dans certains modes de réalisation, la température extérieure, pendant la durée du préchauffage est inférieure ou égale à 5°C, de préférence inférieure ou égale à 0°C, de préférence encore inférieure ou égale à -10°C, et de préférence encore inférieure ou égale à -20°C.

La température extérieure pendant la durée du préchauffage peut notamment être de 5 à 0°C ; ou de 0 à -5°C ; ou de -5 à -10°C ; ou de -10 à -15°C ; ou de -15 à -20°C ; ou de -20 à -25°C ; ou de -25 à -30°C.

Par « *température extérieure* » on entend la température ambiante à l'extérieur du véhicule avant et pendant le préchauffage.

Dans certains modes de réalisation, la durée de préchauffage est de 50 à 60 min ; ou de 40 à 50 min ; ou de 30 à 40 min ; ou de 20 à 30 min ; ou de 10 à 20 min ; ou de 5 à 10 min ; ou de 1 à 5 min.

L'invention concerne également un procédé de pré-conditionnement de la batterie d'un véhicule électrique ou hybride comprenant :
- le démarrage du véhicule, la batterie du véhicule étant à la température initiale avant ce démarrage ; puis
- le préchauffage de la batterie du véhicule de la température initiale à la température finale, au moins en partie au moyen du fluide frigorigène comprenant du 2,3,3,3-tétrafluoropropène.

Dans le cadre de l'invention, on entend par « *pré-conditionnement* » la préparation de la batterie d'un véhicule électrique ou hybride suite au démarrage du véhicule, afin d'atteindre une température optimale permettant le meilleur fonctionnement de la batterie.

### EXEMPLES

Les exemples suivants illustrent l'invention sans la limiter.

Dans ces exemples, on considère une pompe à chaleur avec des moyens de chauffage de la batterie d'un véhicule électrique fonctionnant soit avec du HFC-134a, soit avec du HFO-1234yf. On suppose que le compresseur de la pompe à chaleur présente un volume balayé de 155 cm³ et tourne à 500 t/min seulement, étant donné qu'à basse température, la batterie ne délivre pas beaucoup de puissance. Le compresseur est utilisé pour le préchauffage de la batterie uniquement.

On considère que la pompe à chaleur fonctionne avec un sous-refroidissement de 3°C dans le condenseur et un échangeur interne avec une surchauffe de 5°C.

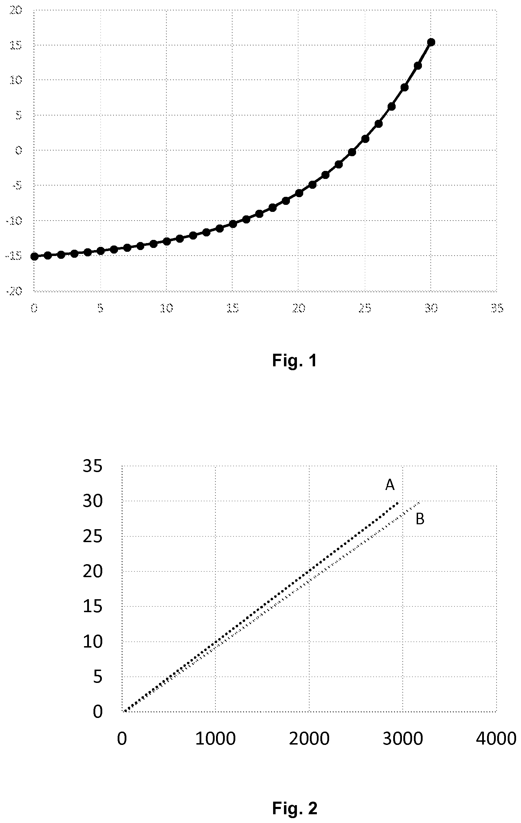

Les résultats de ces exemples sont basés sur des simulations numériques effectuées au moyen du logiciel REFPROP du NIST. La **figure 1** représente le profil de température de la batterie au cours du préchauffage de la batterie, qui est utilisé comme donnée de départ dans ces simulations.

On considère que la température de la batterie est égale à la température de condensation.

### Exemple 1 - performances de la pompe à chaleur

Une analyse des performances d'une pompe à chaleur fonctionnant soit avec du HFC-134a, soit avec du HFO-1234yf, avec une température d'évaporation de -25°C et une température de condensation variant de -15°C à +15°C a été effectuée, afin de simuler le préchauffage de la batterie.

Les résultats sont présentés dans le tableau ci-dessous :

| | R1234yf | | R134a | |
|---|---|---|---|---|
| minutes | Temp B, | Puissance (KW) | Temp B, | Puissance |
| 0 | -15,0 | 1,86 | -15,0 | 1,71 |
| 1 | -14,9 | 1,85 | -14,9 | 1,70 |
| 2 | -14,7 | 1,85 | -14,7 | 1,70 |
| 3 | -14,6 | 1,84 | -14,6 | 1,70 |
| 4 | -14,4 | 1,84 | -14,4 | 1,69 |
| 5 | -14,2 | 1,83 | -14,2 | 1,69 |
| 6 | -14,0 | 1,83 | -14,0 | 1,69 |
| 7 | -13,8 | 1,82 | -13,8 | 1,68 |
| 8 | -13,5 | 1,82 | -13,5 | 1,68 |
| 9 | -13,2 | 1,81 | -13,2 | 1,67 |
| 10 | -12,8 | 1,81 | -12,8 | 1,67 |
| 11 | -12,5 | 1,80 | -12,5 | 1,66 |
| 12 | -12,0 | 1,79 | -12,0 | 1,66 |
| 13 | -11,5 | 1,78 | -11,5 | 1,65 |
| 14 | -11,0 | 1,77 | -11,0 | 1,65 |
| 15 | -10,4 | 1,77 | -10,4 | 1,64 |
| 16 | -9,7 | 1,76 | -9,7 | 1,63 |
| 17 | -8,9 | 1,75 | -8,9 | 1,63 |
| 18 | -8,1 | 1,74 | -8,1 | 1,62 |
| 19 | -7,1 | 1,73 | -7,1 | 1,62 |
| 20 | -6,0 | 1,72 | -6,0 | 1,61 |
| 21 | -4,8 | 1,71 | -4,8 | 1,60 |
| 22 | -3,4 | 1,70 | -3,4 | 1,60 |
| 23 | -1,9 | 1,69 | -1,9 | 1,59 |
| 24 | -0,2 | 1,68 | -0,2 | 1,59 |
| 25 | 1,7 | 1,68 | 1,7 | 1,59 |
| 26 | 3,9 | 1,67 | 3,9 | 1,60 |
| 27 | 6,3 | 1,67 | 6,3 | 1,61 |
| 28 | 9,0 | 1,68 | 9,0 | 1,63 |
| 29 | 12,1 | 1,69 | 12,1 | 1,66 |
| 30 | 15,5 | 1,72 | 15,5 | 1,71 |

Dans ce tableau, « Temp B » désigne la température de la batterie (en °C) et « Puissance » désigne la puissance du compresseur (en kW). Les résultats ci-dessus montrent qu'une pompe à chaleur fonctionnant avec du HFO-1234yf fournit plus de puissance de chauffage qu'une pompe à chaleur fonctionnant avec du HFC-134a pour le préchauffage du véhicule, en particulier au début du préchauffage.

### Exemple 2 - durée du préchauffage à partir de -15°C

Une analyse de la durée de préchauffage d'une batterie d'un véhicule électrique fonctionnant avec une température d'évaporation de -25°C, une température de condensation initiale de -15°C et une température de condensation finale de 15°C a été effectuée.

La **figure 2** représente la durée nécessaire pour la production d'une énergie donnée, au cours du préchauffage de la batterie du véhicule électrique, selon que la pompe à chaleur fonctionne soit avec du HFC-134a (A), soit avec du HFO-1234yf (B).

Ces résultats montrent que pour produire la même énergie de chauffage, la pompe à chaleur comprenant du HFO-1234yf est plus rapide que la pompe à chaleur comprenant du HFC-134a. Par exemple la pompe à chaleur comprenant du HFO-1234yf est capable de produire 3000 kJ en 28 min environ tandis que la pompe à chaleur comprenant du HFC-134a est capable de produire la même quantité d'énergie en 30 min environ seulement. Ainsi, l'utilisation de la pompe à chaleur comprenant du HFO-1234yf permet un gain de temps de pré-conditionnement de 7 % environ par rapport à une pompe à chaleur comprenant du HFC-134a.

### Exemple 3 - durée de préchauffage à partir de -4°C

Une analyse analogue à celle de l'exemple 2 a été réalisée, mais avec une température d'évaporation de -15°C et une température de condensation de -4°C. La température initiale de la batterie est donc de -4°C, et la pompe à chaleur est utilisée pour augmenter la température de la batterie du véhicule de -4°C à 15°C.

La **figure 3** représente la durée nécessaire pour la production d'une énergie donnée, au cours du préchauffage de la batterie du véhicule électrique, selon que la pompe à chaleur fonctionne soit avec du HFC-134a (A), soit avec du HFO-1234yf (B).

Ces résultats montrent que pour produire la même énergie de chauffage, la pompe à chaleur comprenant du HFO-1234yf est plus rapide que la pompe à chaleur comprenant du HFC-134a. Par exemple la pompe à chaleur comprenant du HFO-1234yf est capable de produire 2840 kJ en 19 min environ tandis que la pompe à chaleur comprenant du HFC-134a est capable de produire la même quantité d'énergie en 20 min environ seulement. Ainsi, l'utilisation de la pompe à chaleur comprenant du HFO-1234yf permet un gain de temps de pré-conditionnement de 5 % environ par rapport à une pompe à chaleur comprenant du HFC-134a.

## Revendications

1. Utilisation d'un fluide frigorigène comprenant du 2,3,3,3-tétrafluoropropène dans un circuit de compression de vapeur comprenant un compresseur, pour le préchauffage d'une batterie d'un véhicule électrique ou hybride à partir du démarrage du véhicule, ledit compresseur fonctionnant initialement à une vitesse de rotation de 300 à 1000 t/min.

2. Utilisation selon la revendication 1, dans laquelle la batterie est à une température initiale avant le démarrage qui est inférieure ou égale à 5°C, de préférence inférieure ou égale à 0°C, de préférence encore inférieure ou égale à -10°C, de préférence encore inférieure ou égale à -20°C.

3. Utilisation selon l'une des revendications 1 ou 2, dans laquelle la batterie est à une température finale à l'issue du préchauffage qui est supérieure ou égale à 10°C, de préférence supérieure ou égale à 15°C, et de préférence encore de 15 à 30°C.

4. Utilisation selon l'une des revendications 1 à 3, dans laquelle la batterie comprend une résistance interne, qui contribue au préchauffage de la batterie.

5. Utilisation selon l'une des revendications 1 à 4, dans laquelle la température extérieure, pendant la durée du préchauffage, est inférieure ou égale à 5°C, de préférence inférieure ou égale à 0°C, de préférence encore inférieure ou égale à -10°C, de préférence encore inférieure ou égale à -20°C.

6. Utilisation selon l'une des revendications 1 à 5, dans laquelle le circuit de compression de vapeur comprend un compresseur qui fonctionne initialement à une vitesse de rotation de 350 à 850 t/min et de préférence encore de 500 à 800 t/min.

7. Utilisation selon l'une des revendications 1 à 6, dans laquelle le circuit de compression de vapeur est également adapté à chauffer l'habitacle du véhicule et/ou à climatiser l'habitacle du véhicule et/ou à refroidir la batterie du véhicule.

8. Procédé de pré-conditionnement de la batterie d'un véhicule électrique ou hybride comprenant :
• le démarrage du véhicule, la batterie du véhicule étant à une température initiale avant ce démarrage; puis
• le préchauffage de la batterie du véhicule de la température initiale à une température finale supérieure à la température initiale, au moins en partie au moyen d'un fluide frigorigène comprenant du 2,3,3,3-tétrafluoropropène circulant dans un circuit de compression de vapeur, ledit compresseur fonctionnant initialement à une vitesse de rotation de 300 à 1000 t/min.

9. Procédé selon la revendication 8, dans lequel la batterie est à une température initiale qui est inférieure ou égale à 5°C, de préférence inférieure ou égale à 0°C, de préférence encore inférieure ou égale à -10°C, de préférence encore inférieure ou égale à -20°C.

10. Procédé selon l'une des revendications 8 ou 9, dans lequel la batterie est à une température finale qui est supérieure ou égale à 10°C, de préférence supérieure ou égale à 15°C, et de préférence encore de 15 à 30°C.

## Patentansprüche

1. Verwendung eines 2,3,3,3-Tetrafluorpropen umfassenden Kältemittels in einem einen Kompressor umfassenden Dampfkompressionskreislauf zum Vorheizen einer Batterie eines Elektro- oder Hybridfahrzeugs ab dem Starten des Fahrzeugs, wobei der Kompressor anfänglich mit einer Drehzahl von 300 bis 1000 U/min arbeitet.

2. Verwendung nach Anspruch 1, bei der die Batterie eine Ausgangstemperatur vor dem Starten hat, die 5 °C oder weniger, bevorzugt 0 °C oder weniger, noch bevorzugter -10 °C oder weniger, noch bevorzugter -20 °C oder weniger beträgt.

3. Verwendung nach einem der Ansprüche 1 oder 2, bei der die Batterie eine Endtemperatur nach dem Vorheizen hat, die 10 °C oder mehr, bevorzugt 15 °C oder mehr, noch bevorzugter 15 bis 30 °C beträgt.

4. Verwendung nach einem der Ansprüche 1 bis 3, bei der die Batterie einen internen Widerstand umfasst, der zum Vorheizen der Batterie beiträgt.

5. Verwendung nach einem der Ansprüche 1 bis 4, bei der die Außentemperatur, während der Dauer des Vorheizens, 5 °C oder weniger, bevorzugt 0 °C oder weniger, noch bevorzugter -10 °C oder weniger, noch bevorzugter -20 °C oder weniger beträgt.

6. Verwendung nach einem der Ansprüche 1 bis 5, bei welcher der Dampfkompressionskreislauf einen Kompressor umfasst, der anfänglich mit einer Drehzahl von 350 bis 850 U/min und noch bevorzugter von 500 bis 800 U/min arbeitet.

7. Verwendung nach einem der Ansprüche 1 bis 6, bei welcher der Dampfkompressionskreislauf auch dazu anpasst ist, den Innenraum des Fahrzeugs zu heizen und/oder den Innenraum des Fahrzeugs zu klimatisieren und/oder die Batterie des Fahrzeugs zu kühlen.

8. Verfahren zum Vorkonditionieren der Batterie eines Elektro- oder Hybridfahrzeugs, umfassend:
- das Starten des Fahrzeugs, wobei die Batterie des Fahrzeugs eine Ausgangstemperatur vor diesem Starten hat; dann
- das Vorheizen der Batterie des Fahrzeugs von der Ausgangstemperatur auf eine Endtemperatur, die höher als die Ausgangstemperatur ist, mindestens teilweise mittels eines 2,3,3,3-Tetrafluorpropen umfassenden Kältemittels, das in einem Dampfkompressionskreislauf zirkuliert, wobei der Kompressor anfänglich mit einer Drehzahl von 300 bis 1000 U/min arbeitet.

9. Verfahren nach Anspruch 8, bei dem die Batterie eine Ausgangstemperatur hat, die 5 °C oder weniger, bevorzugt 0 °C oder weniger, noch bevorzugter -10 °C oder weniger, noch bevorzugter -20 °C oder weniger beträgt.

10. Verfahren nach einem der Ansprüche 8 oder 9, bei dem die Batterie eine Endtemperatur hat, die 10 °C oder mehr, bevorzugt 15 °C oder mehr, noch bevorzugter 15 bis 30 °C beträgt.

## Claims

1. Use of a refrigerant fluid comprising 2,3,3,3-tetrafluoropropene in a vapour compression circuit comprising a compressor, for the preheating of a battery of an electric or hybrid vehicle from the starting of the vehicle, said compressor initially operating at a rotational speed of 300 to 1000 rpm.

2. Use according to Claim 1, wherein the battery is at an initial temperature before the starting that is lower than or equal to 5°C, preferably lower than or equal to 0°C, more preferably lower than or equal to -10°C, more preferably lower than or equal to -20°C.

3. Use according to either of Claims 1 and 2, wherein the battery is at a final temperature at the end of the preheating that is higher than or equal to 10°C, preferably higher than or equal to 15°C, and more preferably from 15 to 30°C.

4. Use according to one of Claims 1 to 3, wherein the battery comprises an internal resistor, which contributes to the preheating of the battery.

5. Use according to one of Claims 1 to 4, wherein the outside temperature, throughout the duration of the preheating, is lower than or equal to 5°C, preferably lower than or equal to 0°C, more preferably lower than or equal to -10°C, more preferably lower than or equal to -20°C.

6. Use according to one of Claims 1 to 5, wherein the vapour compression circuit comprises a compressor that initially operates at a rotational speed of 350 to 850 rpm and more preferably from 500 to 800 rpm.

7. Use according to one of Claims 1 to 6, wherein the vapour compression circuit is also designed to heat the passenger compartment of the vehicle and/or to air-condition the passenger compartment of the vehicle and/or to cool the battery of the vehicle.

8. Method for pre-conditioning the battery of an electric or hybrid vehicle, comprising:
• starting the vehicle, the battery of the vehicle being at an initial temperature before this starting; then
• preheating the battery of the vehicle from the initial temperature to a final temperature higher than the initial temperature, at least in part by means of a refrigerant fluid comprising 2,3,3,3-tetrafluoropropene circulating in a vapour compression circuit, said compressor initially operating at a rotational speed of 300 to 1000 rpm.

9. Method according to Claim 8, wherein the battery is at an initial temperature that is lower than or equal to 5°C, preferably lower than or equal to 0°C, more preferably lower than or equal to -10°C, more preferably lower than or equal to -20°C.

10. Method according to either of Claims 8 and 9, wherein the battery is at a final temperature that is higher than or equal to 10°C, preferably higher than or equal to 15°C, and more preferably from 15 to 30°C.
